# EUROPEAN PATENT SPECIFICATION

(11) **EP 0 691 198 B1**
(45) Date of publication and mention of the grant of the patent: **03.12.1997**
(21) Application number: 95201799.4
(22) Date of filing: 03.07.1995
(51) Int. Cl.: B32B 15/08, B65D 65/40

(54) **Packaged catalyst**
Verpackter Katalysator
Catalyseur emballé

(30) Priority: 05.07.1994 NL 9401118
(43) Date of publication of application: 10.01.1996
(73) Proprietor: Akzo Nobel N.V., 6824 BM Arnhem (NL)
(72) Inventor: Heinerman, Jacobus Johannes Leonardus, NL-1077 PG Amsterdam (NL); Smit, Cornelis Pieter, NL-1017 LW Amsterdam (NL); Mangnus, Petrus Josephus, NL-2331 BX Leiden (NL); Baaijens, Louwerens, NL-7462 KG Rijssen (NL)
(74) Representative: Schalkwijk, Pieter Cornelis, c.s.

(56) References cited:
- EP-A- 0 022 502
- AU-A- 568 000
- FR-A- 2 654 980
- GB-A- 2 257 943
- DATABASE WPI Week 9413 Derwent Publications Ltd., London, GB; AN 94-106403 & JP-A-06 055 714 (TOPPAN PRINTING CO LTD) , 1 March 1994

## Description

The invention relates to the packaging of catalysts, in particular catalysts which are sensitive to water and/or oxygen, the catalysts in question being either fresh or spent.

Certain types of catalysts deteriorate in quality if they come into contact with water and/or oxygen. This goes, e.g., for fresh, spent, or presulphided hydroprocessing catalysts, catalysts used to isomerise butane and naphtha, and "pre-reduced" catalysts for refining and hydrogenation purposes. The storage life of these products is reduced if they come into contact with water and/or oxygen. In the case of some sulphided catalysts their coming into contact with oxygen can have much more serious consequences. For, these catalysts are "self-heating," and if they come into contact with oxygen, there is the hazard of fire or an explosion. The very least that will happen in such cases is loss of sulphur.

For the longest time, amorphous isomerisation catalysts have been packed in double polyethylene bags, the whole then being packed in a drum. Although, on the one hand, the optimum storage life of catalysts has been a cause of constant concern, while, on the other, it is well-known that catalysts may be sensitive to water and/or oxygen, the skilled person apparently has so far failed to question the suitability of the use of polyethylene bags for the packaging of catalysts which are sensitive to water and/or oxygen. However, experiments have shown that the oxygen and water permeability of these polyethylene bags is so high that their use would lead to a measurable deactivation of the catalyst already after only one month of storage.

The present invention relates to the use of a specific type of bag for the packaging of catalysts, particularly catalysts which are sensitive to water and/or oxygen, namely a bag which comprises a laminate comprising a layer of a synthetic material and an aluminium layer. The term "laminate comprising a layer of a synthetic material and an aluminium layer" in this connection refers to a construction of one or more synthetic layers and an aluminium layer.
The use of this specific type of bag for the packaging of catalysts which are sensitive to water and/or oxygen results in a longer storage life of the catalysts packaged therein, and in a corresponding improved catalyst performance after long-term storage.

Bags made of a laminate comprising a layer of a synthetic material and an aluminium layer have been known in themselves for a long time, e.g., from EP-A 0 022 502 and GB-A 2 257 943. However, these publications only describe the use of such bags for the packaging of food products. The use of this type of bag for the packaging of catalysts is neither disclosed nor suggested.

For use in the packaging of catalysts according to the invention, preference is given to a bag comprising a laminate built up in such a way that the aluminium layer is covered on either side with a synthetic layer, e.g., with polyethylene terephthalate on the outside of the bag and polyethylene on the inside of the bag. The layer on the inside of the bag preferably does not contain any plasticisers or polyester, since there is a risk of these materials entering into a reaction with the catalyst, which might lead to catalyst deactivation.

To ensure proper adhesion between the aluminium layer and the adjacent layers, preference is given to the presence of an adhesive layer between the outside layer and the aluminium layer, as well as between the inside layer and the aluminium layer.

If so desired, still further layers can be incorporated into the laminate of which the bag is made, e.g., for rendering the bag extra sturdy. In this respect it is noted that the present invention envisages both the use of aluminium laminate bags of a size suitable for use in drums, and the use of aluminium laminate bags of larger size, for example, the so-called big-bags, for the packaging of catalysts. The incorporation of additional layers into the laminate for rendering the bag extra sturdy is of particular interest when the laminate is to be used for bags which are not used in drums, for example, for big-bags.

It may be advantageous to employ the bag according to the invention in combination with bags of other materials. For instance, a catalyst could be packaged in an easy-to-seal inner bag of polyethene and an outer bag which, according to the invention, is made up of a laminate of synthetic material comprising an aluminium layer.

To be properly useful as a bag for packaging catalysts which are sensitive to water and oxygen, the bag according to the invention preferably has a water vapour permeability of less than 0,01 g/m² per 24 hours, determined at 23 °C and 75 % relative atmospheric humidity, and an oxygen permeability of less than 0,01 cm³/m² per 24 hours, determined at 23 °C and 0 % relative atmospheric humidity and about 0,2 bar oxygen pressure.

If the bag is to be used for the packaging of catalysts inside drums, the thickness of the laminate of which the bag is made up suitably ranges from 60 to 280 µm. If said bag consists of three plastic layers, the various layers generally have the following thicknesses:
outside layer: in the range of 5 to 50 µm;
first adhesive layer (if present): in the range of 1 to 5 µm;
aluminium layer: in the range of 5 to 20 µm;
second adhesive layer (if present): in the range of 1 to 5 µm;
inside layer: in the range of 10 to 200 µm.
If so desired, the bag can be provided with a "trunk," a narrowed extension at the open side of the bag enabling its easy emptying. Providing bags for catalysts with trunks is known in itself.

Laminates suitable for making the bags according to the invention include those commercially available from Nittel GMBH, Germany, Bischoff und Klein, Germany, and Safta Spa, Italy.

## Claims

1. Use of a bag which comprises a laminate comprising a layer of a synthetic material and an aluminium layer for packaging catalysts, particularly catalysts which are sensitive to water and/or oxygen.

2. Use according to claim 1, wherein the laminate is made up of at least three layers, with the aluminium layer being covered on either side with a synthetic layer.

3. Use according to claim 2, wherein the side of the aluminium layer which faces the outside of the bag is covered with a polyethylene terephthalate layer, and the side of the aluminium layer which faces the inside of the bag is covered with a layer of low-density polyethylene.

4. Use according to claim 2 or 3, wherein adhesive layers are incorporated between the aluminum layer and the adjacent layers.

5. Use according to any one of the preceding claims, wherein the bag has a water vapour permeability of less than 0,01 g/m² per 24 hours and an oxygen permeability of less than 0,01 cm³/m² per 24 hours per bar.

6. Use according to any one of the preceding claims, wherein the bag is a big-bag type bag.

7. Use according to any one of preceding claims 1 to 5, wherein the bag is of the type suitable for use in drums.

8. Bag comprising a laminate comprising a layer of a synthetic material and an aluminium layer as described in any of the preceding claims, said bag containing fresh or spent catalyst.

## Patentansprüche

1. Verwendung eines Behältnisses, das ein Laminat mit einer Schicht aus einem Kunststoff und eine Aluminiumlage besitzt, zum Verpacken von Katalysatoren, insbesondere Katalysatoren, die gegen Wasser und/oder Sauerstoff empfindlich sind.

2. Verwendung nach Anspruch 1, wobei das Laminat aus mindestens drei Lagen gefertigt und die Aluminiumlage auf beiden Seite mit einer Kunststofflage beschichtet ist.

3. Verwendung nach Anspruch 2, wobei die der Aussenseite des Behältnisses zugewandte Seite der Aluminiumlage mit einer Polyethylenterephthalatschicht und die der Innenseite des Behältnisses zugekehrte Seite der Aluminiumlage mit einer Lage aus Polyethylen niedriger Dichte beschichtet ist.

4. Verwendung nach einem der Ansprüche 2 oder 3, wobei zwischen der Aluminiumlage und den angrenzenden Lagen Haft- oder Klebstoffschichten angeordnet sind.

5. Verwendung nach einem der vorangehenden Ansprüche, wobei das Behältnis eine Wasserdampf-Durchlässigkeit von weniger als 0,01 g/m² pro 24 Stunden und eine Sauerstoff-Durchlässigkeit von weniger als 0,01 cm³/m² pro 24 Stunden pro bar besitzt.

6. Verwendung nach einem der vorangehenden Ansprüche, wobei das Behältnis ein Gross-Sackbehältnis ist.

7. Verwendung nach einem der vorangehenden Ansprüche 1 bis 5, bei welcher das Behältnis dem zur Verwendung in Trommeln geeigneten Typ entspricht.

8. Behältnis, enthaltend ein Laminat mit einer Lage aus einem Kunststoff und einer Aluminiumlage, wie in einem der vorangehenden Ansprüche beschrieben, wobei das Behältnis frischen oder verbrauchten Katalysator enthält.

## Revendications

1. Utilisation d'un sac comprenant un stratifié comprenant une couche d'un matériau synthétique et une couche d'aluminium pour l'emballage de catalyseurs, en particulier de catalyseurs sensibles à l'eau et/ou à l'oxygène.

2. Utilisation selon la revendication 1, dans, laquelle le stratifié est constitué d'au moins trois couches, avec la couche d'aluminium recouverte des deux côtés d'une couche synthétique.

3. Utilisation selon la revendication 2, dans laquelle le côté de la couche d'aluminium faisant face à l'extérieur du sac est recouverte d'une couche en polyéthylène térèphtalate et le côté de la couche d'aluminium faisant face à l'intérieur du sac est recouverte d'une couche de polyéthylène de faible densité.

4. Utilisation selon la revendication 2 ou 3, dans laquelle des couches adhésives sont incorporées entre la couche d'aluminium et les couches adjacentes.

5. Utilisation selon l'une quelconque des revendications précédentes, dans laquelle le sac présente une perméabilité à la vapeur d'eau inférieure à 0,01 g/m²/24 heures et une perméabilité à l'oxygène inférieure à 0,01 cm³/m²/24 heures par bar.

6. Utilisation selon l'une quelconque des revendications précédentes, dans laquelle le sac est un sac de type "grand sac".

7. Utilisation selon l'une quelconque des revendications précédentes 1 à 5, dans laquelle le sac est de type approprié pour l'utilisation dans des tambours.

8. Sac comprenant un stratifié comprenant une couche d'un matériau synthétique et une couche d'aluminium tel que décrit dans l'une quelconque des revendications précédentes, ledit sac contenant du catalyseur frais ou usé.
